(19)

Europäisches
Patentamt
European
Patent Office
Office européen
des brevets

(11) **EP 4 783 244 A1**

(12) **EUROPEAN PATENT APPLICATION**

(43) Date of publication:
**29.07.2026 Bulletin 2026/31**

(21) Application number: **26150551.5**

(22) Date of filing: **07.01.2026**

(51) International Patent Classification (IPC):
*H01M 4/04* (2006.01)    *H01M 4/133* (2010.01)
*H01M 4/139* (2010.01)    *H01M 4/62* (2006.01)
*H01M 10/0525* (2010.01)

(52) Cooperative Patent Classification (CPC):
**H01M 4/1393; H01M 4/0404; H01M 4/133;
H01M 4/622;** H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.01.2025 JP 2025012011**

(71) Applicant: **Prime Planet Energy & Solutions, Inc.
Chuo-ku, Tokyo 103-0022 (JP)**

(72) Inventors:
• **YONEYAMA, Takayuki
Tokyo,, 103-0022 (JP)**
• **ISHIKAWA, Kaori
Tokyo, 103-0022 (JP)**

(74) Representative: **Kuhnen & Wacker
Patent- und Rechtsanwaltsbüro PartG mbB
Prinz-Ludwig-Straße 40 A
85354 Freising (DE)**

(54) **METHOD OF PRODUCING NEGATIVE ELECTRODE SLURRY**

(57)    A method of producing a negative electrode slurry comprises:
a first kneading step to knead a negative electrode active material containing carbon particles, a water-soluble polymer, and water at a kneading load (1a) of 2.2 Wh/kg or less, and then knead at a kneading load (1b), wherein the kneading load (1b) is more than the kneading load (1a) and within a range of 2.0 to 11.6 Wh/kg; and
a second kneading step to knead a kneaded product obtained in the first kneading step, a binder other than the water-soluble polymer, and water at a kneading load (2) of 0.5 Wh/kg or less.

FIG.1

```
        ┌─────────┐
        │  START  │
        └─────────┘
             │
             ▼
  ┌──────────────────────────────┐
  │ KNEAD NEGATIVE ELECTRODE     │
  │ ACTIVE MATERIAL, WATER-SOLUBLE│
  │ POLYMER, AND WATER           │
  └──────────────────────────────┘
             │
             ▼
  ┌──────────────────────────────┐
  │ FURTHER ADD BINDER AND       │
  │ WATER AND KNEAD              │
  └──────────────────────────────┘
             │
             ▼
        ┌─────────┐
        │   END   │
        └─────────┘
```

EP 4 783 244 A1

**Description**

CROSS REFERENCE TO RELATED APPLICATIONS

This nonprovisional application is based on Japanese Patent Application No. JP2025-012011 filed on January 28, 2025, with the Japan Patent Office, the entire contents of which are hereby incorporated by reference.

BACKGROUND OF THE INVENTION

Field of the Invention

The present invention relates to a method of producing a negative electrode slurry.

Description of the Background Art

It is known that a negative electrode of a secondary battery can be prepared by applying negative electrode slurry to a current collector. In the case where the performance of the negative electrode is affected by the properties of the negative electrode slurry, the battery properties of the secondary battery produced by using the negative electrode may also be affected. As an index for evaluation of the properties of negative electrode slurry, blackness is known (for example, Japanese Patent Laying-Open No. 2024-46312).

SUMMARY OF THE INVENTION

Properties of negative electrode slurry can vary depending on the components of the negative electrode slurry as well as conditions of production of the negative electrode slurry, among others. There is a demand for producing a negative electrode slurry that can produce a negative electrode of a secondary battery with good battery properties.
The present disclosure aims at providing a method of producing a negative electrode slurry that can be used for producing a secondary battery with good battery properties.

[1] A method of producing a negative electrode slurry, the method comprising:

a first kneading step to knead a negative electrode active material containing carbon particles, a water-soluble polymer, and water at a kneading load (1a) of 2.2 Wh/kg or less, and then knead at a kneading load (1b), wherein the kneading load (1b) is more than the kneading load (1a) and within a range of 2.0 to 11.6 Wh/kg; and
a second kneading step to knead a kneaded product obtained in the first kneading step, a binder other than the water-soluble polymer, and water at a kneading load (2) of 0.5 Wh/kg or less.

[2] The method of producing a negative electrode slurry according to [1], wherein a blackness of a supernatant separated by centrifugation of the negative electrode slurry is from 4.0 to 16.0.
[3] The method of producing a negative electrode slurry according to [1] or [2], wherein the water-soluble polymer is a cellulose derivative.
[4] The method of producing a negative electrode slurry according to any one of [1] to [3], wherein

the water-soluble polymer is carboxymethylcellulose, and
a viscosity of a 1-mass% aqueous solution of the carboxymethylcellulose measured at 25°C at a rotational speed of 40 rpm is from 1.0 to 10.0 Pa·s.

[5] The method of producing a negative electrode slurry according to any one of [1] to [4], wherein the binder includes styrene-butadiene rubber.
[6] The method of producing a negative electrode slurry according to any one of [1] to [5], wherein

the carbon particles include a covered graphite particle, and
the covered graphite particle has a core made of graphite and a conductive covering layer covering at least part of a surface of the core.

[7] The method of producing a negative electrode slurry according to any one of [1] to [6], wherein in the first kneading step, the negative electrode active material, the water-soluble polymer, and water are kneaded in a proportion of 100:(0.5 to 5):(40 to 75) (in mass).

[8] The method of producing a negative electrode slurry according to any one of [1] to [7], wherein in the second kneading step, the negative electrode active material, the water-soluble polymer, the binder, and water are kneaded in a proportion of 100:(0.5 to 5):(0.5 to 5):(60 to 150) (in mass).

[9] The method of producing a negative electrode slurry according to any one of [1] to [8], wherein

an oil absorption number of the carbon particles is from 30 to 55 mL/100g, and

a solid content of a mixture of components to be kneaded in the first kneading step is from 58 to 70 mass%.

The foregoing and other objects, features, aspects and advantages of the present invention will become more apparent from the following detailed description of the present invention when taken in conjunction with the accompanying drawing.

BRIEF DESCRIPTION OF THE DRAWINGS

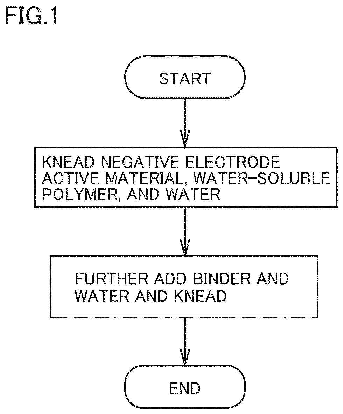

Fig. 1 is a flowchart illustrating the procedure to produce a negative electrode slurry according to an embodiment.

DESCRIPTION OF THE PREFERRED EMBODIMENTS

Herein, a numerical range such as "from x to y" includes the upper limit and the lower limit, unless otherwise specified. That is, "(from) x to y" means a numerical range of "not less than x and not more than y". Any numerical value selected from a certain numerical range may be used as a new upper limit or a new lower limit. For example, any numerical value from a certain numerical range may be combined with any numerical value described in another location of the present specification or in a table or a drawing to set a new numerical range.

A negative electrode slurry produced by a method of producing a negative electrode slurry according to the present embodiment (hereinafter also called "the present method") (hereinafter, a negative electrode slurry of this type is also called "the present slurry") can be used for forming a negative electrode active material layer of a negative electrode of a secondary battery. The present slurry can contain a negative electrode active material containing carbon particles, a water-soluble polymer, a binder other than the water-soluble polymer, and water, and may further contain a conductive material.

The negative electrode can have a current collector and a negative electrode active material layer formed on the current collector. The negative electrode active material layer can be formed by applying the present slurry to the current collector, followed by drying, compressing, and the like of the present slurry thus applied to the current collector. For example, the current collector is a metal foil sheet made of a copper material such as copper and copper alloy or an iron material such as iron and iron alloy.

The secondary battery may be a non-aqueous electrolyte secondary battery such as a lithium-ion secondary battery that is charged and discharged through occlusion and release of lithium ions. The secondary battery has an electrode assembly containing a negative electrode prepared by using the present slurry as well as a non-aqueous electrolyte solution, and it can further have a battery case for accommodating the electrode assembly and the non-aqueous electrolyte solution.

The battery case may include an exterior package having an opening as well as a sealing plate for sealing the opening. Each of the exterior package and the sealing plate is preferably made of metal, and can be formed by using aluminum, aluminum alloy, iron, iron alloy, or the like. Between the electrode assembly and the exterior package, a resin sheet may be provided as an electrode holder. Alternatively, the battery case may be made of a laminated film. The laminated film has a multilayer structure formed of a metal layer and a resin layer stacked on top of one another, for example. The edges of the laminated film can be stacked together and fused to form a pouch-shaped battery case.

The electrode assembly may include a positive electrode, a negative electrode, and a separator. In the electrode assembly, a positive electrode active material layer of the positive electrode faces a negative electrode active material layer of the negative electrode, with the separator interposed therebetween. The electrode assembly may be a stack-type one that is formed by stacking the positive electrode, the negative electrode, and the separator, or may be a wound-type one that is formed by stacking the positive electrode, the negative electrode, and the separator and winding the resulting stack. After the stack is wound, the wound-type electrode assembly may be pressed into a flat shape.

The positive electrode usually has a positive electrode current collector and a positive electrode active material layer. The positive electrode current collector and the positive electrode active material layer can be formed with known materials. The separator has a base material, and on at least one side of the base material, it may have a functional layer. Examples of the functional layer include an adhesive layer and a heat-resistant layer, for example, and the functional layer can be either one of them or both. The separator and the functional layer can be formed with known materials. The non-aqueous electrolyte solution is preferably obtained by adding an electrolyte to a non-aqueous solvent such as an organic solvent. As the electrolyte, a known material can be used.

In the following, the method of producing a negative electrode slurry will be described in detail. Fig. 1 is a flowchart illustrating the procedure to produce a negative electrode slurry according to an embodiment.

The present method includes a first kneading step and a second kneading step described below.

First kneading step:

knead a negative electrode active material containing carbon particles, a water-soluble polymer, and water at a kneading load (1a) of 2.2 Wh/kg or less (hereinafter, the step to knead at the kneading load (1a) is also called "a step (1a)"), and

then knead at a kneading load (1b) which is more than the kneading load (1a) and within a range of 2.0 to 11.6 Wh/kg (hereinafter, the step to knead at the kneading load (1b) is also called "a step (1b)").

Second kneading step:

knead a kneaded product obtained in the first kneading step, a binder other than the water-soluble polymer (hereinafter also simply called "a binder"), and water at a kneading load (2) of 0.5 Wh/kg or less.

The kneading load is an index of the shearing force applied to the negative electrode active material at the time of kneading the blend (the mixture of the materials to be kneaded). Herein, the kneading load is calculated by converting the cumulative electric power [Wh] required of the kneading apparatus for kneading the blend, into a value per 1 kg of the negative electrode active material in the blend. Specifically, it can be calculated by using the output current used for load application by the kneading apparatus at the time of kneading with load (shearing force) application to the blend, to calculate the total electric power, and then dividing the resulting total electric power by the mass of the negative electrode active material contained in the blend; more specifically, it can be calculated in the manner described in Examples. The above-mentioned output current used for load application by the kneading apparatus is a value after subtracting the output current at the time of kneading without load application to the blend (that is, a value obtained by subtracting the output current at the kneading apparatus at the time of kneading without load application to the blend from the output current at the kneading apparatus at the time of kneading with load application to the blend). The kneading load can be adjusted by changing the rotational speed of the stirring blade of the kneading apparatus, the solid content of the blend, the viscosity of the blend, the kneading duration, and the like. Because the kneading load is the cumulative electric power per 1 kg of the negative electrode active material, it does not depend on the type and the size of the kneading apparatus. The greater the kneading load, the greater the shearing force applied to the negative electrode active material at the time of kneading the blend. Kneading at a kneading load of 0 (zero) Wh/kg means kneading with no shearing force applied to the negative electrode active material at the time of kneading the blend.

In the present method, in the step (1a) of the first kneading step, the negative electrode active material, the water-soluble polymer, and water are kneaded at a small kneading load (1a). By this, in the step (1a), a kneaded product with reduced aggregation of the negative electrode active material and the water-soluble polymer can be obtained with reduced chipping and breakage, etc. of the carbon particles caused by kneading. With reduced chipping and breakage of the carbon particles, degradation of conductivity of the carbon particles can be reduced.

After the step (1a), the first kneading step includes a step (1b) to knead the kneaded product obtained in the step (1a) at a kneading load (1b). Because aggregation of the negative electrode active material and the water-soluble polymer is reduced in the kneaded product obtained in the step (1a), it is possible to make the water-soluble polymer adhere to the surface of the negative electrode active material by performing kneading at the proper kneading load (1b), which is greater than the kneading load (1a). This can enhance adhesion between the negative electrode active material particles in a negative electrode active material layer formed with the present slurry, and thereby conductive paths tend to be formed between the negative electrode active material particles.

In the second kneading step, the kneaded product obtained in the first kneading step (hereinafter also called "the kneaded product (1)"), a binder, and water are kneaded at the small kneading load (2), and thereby the present slurry in which the kneaded product (1) and the binder are uniformly dispersed can be obtained with reduced damage of the binder caused by kneading. This tends to enhance adhesion strength between the current collector and the negative electrode active material layer formed by application of the present slurry to the current collector.

As described above, in the present method, kneading loads in the first kneading step and the second kneading step are adjusted. With this, in a negative electrode produced by using the present slurry, conductivity of graphite particles, conductive path formation between negative electrode active material particles, and adhesion between the current collector and the negative electrode active material layer can be enhanced. As a result, by using a negative electrode produced by using the present slurry, it is possible to obtain a secondary battery with good battery properties such as good resistance properties.

The blackness of the supernatant separated by centrifugation of the present slurry is preferably from 4.0 to 16.0, and it may be from 4.5 to 15.5, or from 5.0 to 15.0, or from 5.5 to 14.5, or from 6.0 to 14.0, or from 7.0 to 13.0, or from 7.5 to 12.0. Typically, the supernatant contains fine particles produced by chipping and breakage, etc. of the carbon particles, as well as components such as the water-soluble polymer and the binder from the present slurry.

The blackness can be used as an index of the extent of damage of the carbon particles caused by kneading during production of the negative electrode slurry as well as the extent of adhesion of the water-soluble polymer to the surface of the negative electrode active material. It is conceivable that the greater the blackness is, the more fine particles the negative electrode slurry contains, and on the other hand, the smaller the blackness is, the less likely the water-soluble polymer is adhered to the surface of the negative electrode active material and the less likely the formation of conductive paths occurs in the resulting negative electrode active material layer. Therefore, with the blackness falling within the above-mentioned range, in a negative electrode produced by using the present slurry, conductivity of graphite particles, conductive path formation between the negative electrode active material particles, and adhesion between the current collector and the negative electrode active material layer tend to be enhanced, and a secondary battery with good battery properties such as good resistance properties tends to be produced. Thus, blackness can be used as an index for assessing battery properties of a secondary battery.

The blackness can be adjusted by changing the type of the carbon particles, the amount of the kneading load (1a), the amount of the kneading load (1b), the viscosity of a mixture of the components to be kneaded in the first kneading step (a mixture containing the negative electrode active material, the water-soluble polymer, and water), and/or the like. The viscosity of the mixture can be adjusted by changing the type, amount, and/or the like of the water-soluble polymer.

The blackness can be measured by the procedure described below, and more specifically, it can be measured in the manner described in Examples below. Firstly, the present slurry is diluted 10-fold with pure water and centrifuged, and thereby supernatant is obtained. The supernatant is collected and diluted 5-fold with pure water. With an absorption spectrometer, the absorbance of the diluted supernatant is measured at an optical path length of 25 mm at wavelengths of 600 nm, 700 nm, 800 nm, and 900 nm, namely absorbances A(600), A(700), A(800), and A(900), and the total of these absorbances is multiplied by 5 to calculate the blackness (see the below equation).

$$\text{Blackness}=[A(600)+A(700)+A(800)+A(900)]\times 5$$

The solid content of the present slurry is from 40 to 60 mass%, for example, and it may be from 43 to 58 mass%, or from 45 to 57 mass%, or from 47 to 56 mass%.

The viscosity of the present slurry at 25°C at a shear rate of 100 s$^{-1}$ is from 0.6 to 2.0 Pa·s, for example, and it may be from 0.8 to 1.8 Pa·s, or from 0.9 to 1.7 Pa·s, or from 1.0 to 1.6 Pa·s, or from 1.1 to 1.5 Pa·s, or from 1.2 to 1.4 Pa·s. With the viscosity falling within the above-mentioned range, applicability of the present slurry to the current collector can be good. The viscosity of the present slurry can be determined by firstly obtaining a flow curve with the use of a rheometer as the shear rate is increased and then reading the viscosity on the flow curve at a shear rate of 100 s$^{-1}$; more specifically, it can be measured in the manner described in Examples.

In the first kneading step, it is preferable to knead the components (the negative electrode active material, the water-soluble polymer, and water) in a proportion of (negative electrode active material):(water-soluble polymer): water=100:(0.5 to 5.0):(40 to 75) (in mass). The proportion of (negative electrode active material):(water-soluble polymer):water (in mass) may be 100:(0.5 to 4.0):(45 to 65), or 100:(0.5 to 2.0):(49 to 59), or 100:(0.5 to 1.0):(51 to 57). Herein, when one component comprises two or more types of components, the mass and the content of this one component refers to the total amount of these two or more types of components. The proportion between the components can be freely selected without departing from the above-mentioned range. It is preferable that both the proportion of the components in the step (a) and the proportion of the components in the step (b) fall within the above-mentioned range, and they may be the same as or different from each other without departing from the above-mentioned range.

The kneading load (1a) is simply required to be 2.2 Wh/kg or less, and it may be 2.0 Wh/kg or less, or 1.5 Wh/kg or less, or 1.0 Wh/kg or less, or 0.8 Wh/kg or less, or 0.6 Wh/kg or less, or 0.0 Wh/kg, or more than 0.00 Wh/kg and not more than 2.00 Wh/kg, or from 0.01 to 1.50 Wh/kg, or from 0.05 to 1.00 Wh/kg, or from 0.10 to 0.80 Wh/kg, or from 0.20 to 0.60 Wh/kg. Preferably, the ratio of the kneading load (1a) to the kneading load (1b) is 40% or less, and it may be 35% or less, or 30% or less, or 20% or less. With the kneading load (1a) falling within the above-mentioned range, chipping and breakage, etc. of the carbon particles caused by kneading in the step (1a) can be reduced.

The solid content of the mixture of the components to be kneaded in the step (1a) (a mixture containing the negative electrode active material, the water-soluble polymer, and water) is from 58 to 70 mass%, for example, and it may be from 60 to 69 mass%, or from 62 to 68 mass%, or from 63 to 67 mass%, or from 64 to 66 mass%, or from 65 to 70 mass%, or from 66 to 70 mass%, or from 58 to 65 mass%, or from 58 to 64 mass%.

Kneading duration in the step (1a) is from 1 to 30 min, for example, and it may be from 2 to 25 min, or from 3 to 20 min, or from 4 to 15 min, or from 5 to 10 min.

The rotational speed of the stirring blade of the kneading apparatus used for kneading in the step (1a) may be selected depending on the size of the kneading apparatus and the like; for example, it is from 3 to 35 rpm, and it may be from 5 to 30 rpm, or from 7 to 25 rpm, or from 8 to 20 rpm, or from 10 to 15 rpm. When the kneading apparatus is a planetary mixer, it is preferable to set the number of revolutions to fall within the above-mentioned range.

The kneading load (1b) is simply required to be greater than the kneading load (1a) and fall within the range of 2.0 to 11.6 Wh/kg. For example, the kneading load (1b) may be from 2.0 to 11.0 Wh/kg, or from 2.2 to 10.5 Wh/kg, or from 2.5 to 10.0 Wh/kg, or from 3.0 to 9.0 Wh/kg, or from 3.5 to 8.5 Wh/kg, or from 4.0 to 8.0 Wh/kg, or from 4.5 to 7.5 Wh/kg, or from 5.0 to 7.0 Wh/kg. With the kneading load (1b) falling within the above-mentioned range, the water-soluble polymer can adhere to the surface of the negative electrode active material due to kneading in the step (1b), and thereby adhesion between the negative electrode active material particles can be enhanced.

The solid content of the mixture of the components to be kneaded in the step (1b) (a mixture containing the negative electrode active material, the water-soluble polymer, and water) may be different from the solid content of the mixture kneaded in the step (1a), but preferably they are the same. The solid content of the mixture in the step (1b) may fall within the above-mentioned range of the solid content of the mixture in the step (1a).

Kneading duration in the step (1b) is from 1 to 120 min, for example, and it may be from 3 to 100 min, or from 5 to 80 min, or from 10 to 60 min, or from 12 to 50 min, or from 15 to 40 min, or from 1 to 30 min, or from 3 to 25 min.

The rotational speed of the stirring blade of the kneading apparatus used for kneading in the step (1b) may be selected depending on the size of the kneading apparatus and the like; for example, it is from 30 to 80 rpm, and it may be from 35 to 70 rpm, or from 37 to 65 rpm, or from 40 to 60 rpm. When the kneading apparatus is a planetary mixer, it is preferable to set the number of revolutions to fall within the above-mentioned range.

In the step (1a) and the step (1b), kneading may be carried out with the same kneading apparatus at the same solid content. In this case, the kneading load (1a) and the kneading load (1b) may be adjusted to be suitable for the rotational speed of the stirring blade of the kneading apparatus and/or the kneading duration. Alternatively, the kneading apparatus used in the step (1a) may be different from that in the step (1b), and the solid content of the mixture in the step (1a) may be different from that in the step (1b).

In the first kneading step, after the step (1a), it is preferable to implement the step (1b) without implementing any additional kneading step. The step (1a) and the step (1b) may be implemented successively, or alternatively, kneading may be paused after the step (1a) and before the step (1b).

In the second kneading step, it is preferable to knead the components (the kneaded product (1) (containing the negative electrode active material, the water-soluble polymer, and water), the binder, and water) so that the proportion of (negative electrode active material):(water-soluble polymer):binder:water=100:(0.5 to 5.0):(0.5 to 5.0):(60 to 150) (in mass) is achieved. The proportion of (negative electrode active material):(water-soluble polymer):binder:water (in mass) may be 100:(0.5 to 4.0):(0.5 to 4.0):(70 to 120), or 100:(0.5 to 2.0):(0.5 to 2.0):(75 to 100), or 100:(0.5 to 1.0):(0.5 to 1.0):(80 to 95). The proportion between the components can be freely selected without departing from the above-mentioned range.

The kneading load (2) is simply required to be 0.5 Wh/kg or less, and it may be 0.3 Wh/kg or less, or 0.1 Wh/kg or less, or 0.0 Wh/kg, or more than 0.00 Wh/kg and not more than 0.50 Wh/kg, or from 0.01 to 0.30 Wh/kg, or from 0.05 to 0.10 Wh/kg, or from 0.10 to 0.20 Wh/kg. Preferably, the kneading load (2) is 0.00 Wh/kg. With the kneading load (2) falling within the above-mentioned range, the present slurry in which the kneaded product (1) and the binder are uniformly dispersed can be obtained with reduced damage of the binder caused by kneading in the second kneading step.

The solid content of the mixture to be kneaded in the second kneading step containing the kneaded product (1), the binder, and water is from 40 to 60 mass%, for example, and it may be from 43 to 58 mass%, or from 45 to 57 mass%, or from 47 to 56 mass%. The solid content of the mixture may be the same as the solid content of the present slurry.

Kneading duration in the second kneading step is from 1 to 30 min, for example, and it may be from 3 to 25 min, or from 5 to 20 min, or from 7 to 15 min.

The rotational speed of the stirring blade of the kneading apparatus used for kneading in the second kneading step may be selected depending on the size of the kneading apparatus and the like; for example, it is from 10 to 60 rpm, and it may be from 15 to 55 rpm, or from 20 to 50 rpm, or from 30 to 45 rpm. When the kneading apparatus is a planetary mixer, it is preferable to set the number of revolutions to fall within the above-mentioned range.

In the first kneading step (the step (1a) and/or the step (1b)) and the second kneading step, the same kneading apparatus may be used or different kneading apparatuses may be used. After the step (1b) of the first kneading step, it is preferable to implement the second kneading step without implementing any additional kneading step. The step (1b) and the second kneading step may be implemented successively, or alternatively, kneading may be paused after the step (1b) and before the second kneading step.

In the present method, each of the kneading steps can be implemented with the use of a known kneading apparatus. Examples of the kneading apparatus include a stirrer equipped with a rotating blade, a filmixer, a media agitation mill, a planetary mixer, a twin-screw kneader, and the like, and one, two, or more of these can be used.

In the following, the components contained in the present slurry will be described.

The negative electrode active material contains carbon particles, and it may contain a negative electrode active material other than carbon particles. Examples of the negative electrode active material other than carbon particles include metal-based particles. The content of the carbon particles relative to the negative electrode active material is preferably 90 mass% or more, and it may be 92 mass% or more, or 95 mass% or more, or 100 mass%, or from 90 to 99 mass%, or from 92 to 98 mass%, or from 95 to 97 mass%. According to the present method, chipping and breakage, etc. of the carbon particles caused by kneading can be reduced. Therefore, when the present method is used for producing a negative electrode slurry that can achieve a high content of carbon particles in the negative electrode active material, a secondary battery with good battery properties tends to be obtained.

The carbon particles may be graphite particles, hard carbon particles, soft carbon particles, and covered graphite particles, and the carbon particles may include one, two, or more of these. The graphite may be natural graphite, or may be artificial graphite. The covered graphite particle is a particle that has a core made of graphite and a conductive covering layer covering at least part of the surface of the core. The covering layer of the covered graphite is simply required to cover at least part of the surface of the core, and it may cover the entire surface of the core. The proportion of the area of the surface of the core covered with the covering layer relative to the entire surface of the core may be from 50 to 100%, or from 70 to 99%, or from 90 to 95%. The covering layer is simply required to be conductive, and for example, it may be an amorphous carbon film. The carbon particle is preferably a graphite particle, more preferably a covered graphite particle. The covered graphite particles tend to undergo chipping, breakage, and peeling off of the covering layer due to kneading during production of the negative electrode slurry. According to the present method, chipping, breakage, and peeling off of the covering layer caused by kneading can be reduced, and thereby with the use of the present slurry, a secondary battery with good battery properties tends to be obtained.

The oil absorption number of the carbon particles is preferably from 30 to 55 mL/100g, and it may be from 30 to 50 mL/100g, or from 35 to 45 mL/100g, or from 38 to 43 mL/100g. The oil absorption number of the carbon particles can be measured in accordance with JIS K6217-4:2017 (Determination of oil absorption number), and can be measured with the use of linseed oil as the oil on an oil absorption number measurement apparatus manufactured by ASAHI SOUKEN, for example. More specifically, as described below in Examples, the oil absorption number of the carbon particles is determined by detecting the torque while linseed oil is being added to the carbon particles, determining the amount of linseed oil added until a torque equivalent to 70% of the maximum torque is generated, and converting the resulting amount into the amount per 100 g of the carbon particles.

When the oil absorption number of the carbon particles falls within the above-mentioned range, it is preferable to set the solid content of the mixture to be kneaded in the first kneading step containing the negative electrode active material, the water-soluble polymer, and water, to the range of 58 to 70 mass%. The solid content here may fall within the range of the solid content mentioned above for the step (1a) and the step (1b). By setting the solid content of the mixture depending on the oil absorption number of the carbon particles, it tends to be easier to control the kneading load (1a) and the kneading load (1b) in the first kneading step to fall within the above-mentioned range.

Examples of the metal-based particles include particles of a metallic element such as an elemental metal or a metal oxide including an element selected from the group consisting of silicon (Si), tin (Sn), antimony (Sb), bismuth (Bi), titanium (Ti), and germanium (Ge). Preferably, the metal-based particles include particles of one or more types selected from the group consisting of Si, SiOx (x=0.5 to 1.5), a composite of Si and C (hereinafter also called "an SiC composite"), and Sn, or they are particles of one or more types selected from this group; more preferably, they include particles of one or more types selected from the group consisting of Si, SiOx, and an SiC composite, or they are particles of one, two, or more types selected from this group. Further preferably, the metal-based particles are SiC composite particles. The SiC composite is, for example, a composite in which Si is dispersed in the carbon matrix.

The water-soluble polymer is a polymer soluble in water. The water-soluble polymer may be a polymer derived from a naturally-occurring matter, or may be a synthetic polymer. Examples of the water-soluble polymer include one, two, or more selected from the group consisting of polysaccharides, polyacrylic acid (hereinafter also called "PAA"), polyvinyl alcohol, water-soluble epoxy resins, water-soluble polyesters, water-soluble polyamides, derivatives thereof, and salts thereof. Examples of the polysaccharides include starches such as starch acetate, starch phosphate, carboxymethyl starch, and hydroxyethyl starch; cellulose derivatives such as carboxymethylcellulose (hereinafter also called "CMC"), methylcellulose, hydroxyethylcellulose, and hydroxypropylcellulose; polyuronides such as pectic acid and alginic acid; pullulan; dextrin; and the like. Among these, the water-soluble polymer is preferably one or more types selected from a cellulose derivative and PAA; more preferably, it includes a cellulose derivative; further preferably, it includes CMC. The water-soluble polymer may be in acid form, or may be in salt form, or may be a mixture of these. Each of the CMC and the PAA may be in acid form or in salt form. When the CMC and the PAA are in salt form, the salt may be a salt thereof with an alkali metal such as lithium, potassium, or sodium, an ammonium salt, and the like.

When the water-soluble polymer is CMC, the viscosity of a 1-mass% aqueous solution of CMC measured at 25°C at a rotational speed of 40 rpm is preferably from 1.0 to 10.0 Pa·s, and it may be from 2.0 to 8.0 Pa·s, or from 3.0 to 7.0 Pa·s, or from 4.0 to 5.0 Pa·s. This viscosity of CMC can be measured with a rotational viscometer as described below in Examples. This viscosity of CMC affects the viscosity of the mixture to be kneaded in the first kneading step containing the negative electrode active material, the water-soluble polymer, and water. When this viscosity of CMC is too great, excessive shearing force tends to be applied to the negative electrode active material in the first kneading step, particularly in the step (1a), and as a result, chipping and breakage, etc. of the carbon particles tend to occur. When this viscosity of CMC is too small, the viscosity of the negative electrode slurry is small and thereby applicability to the current collector is low.

Examples of the binder include one, two, or more selected from the group consisting of styrene-butadiene rubber (hereinafter also called "SBR"); polyvinyl acetate; fluorine-containing resins such as polytetrafluoroethylene (PTFE) and polyvinylidene difluoride (PVdF); olefin-based resins such as polyethylene, polypropylene, ethylene-propylene-isoprene copolymer, and ethylene-propylene-butadiene copolymer; acrylonitrile butadiene rubber (NBR); polyacrylonitrile (PAN); polyimide; polyamide; and acrylic resins such as ethylene-(acrylic acid) copolymer. Preferably, the binder includes SBR.

The water is preferably pure water, more preferably ultrapure water. Examples of the pure water include distilled water, ion-exchanged water, water produced through a reverse osmosis membrane (RO water), purified water, and the like.

Examples of the conductive material include carbon materials such as fibrous carbon, carbon black (such as acetylene black and Ketjenblack), coke, activated carbon, and the like. Examples of the fibrous carbon include carbon nanotubes (hereinafter also called "CNTs"). The CNTs may be single-walled carbon nanotubes (SWCNTs), or may be multi-walled carbon nanotubes such as double-walled carbon nanotubes (DWCNTs). In the present slurry, the proportion of (negative electrode active material):(conductive material) (in mass) may be 100:(0.0 to 7.0), or 100:(0.01 to 6.0), or 100:(0.1 to 5.5), or 100:(0.005 to 1.0), or 100:(0.007 to 0.1). For the purpose of uniformly dispersing the conductive material in the present slurry so that conductive paths tend to be formed in the negative electrode active material layer, the conductive material is preferably kneaded in the step (1a) in the first kneading step.

[Examples]

In the following, the present disclosure will be described in further detail by way of Examples and Comparative Examples.

[Measurement of Oil Absorption Number of Carbon Particles]

The oil absorption number of carbon particles was measured in accordance with JIS K6217-4:2017 (Determination of oil absorption number), with the use of linseed oil as the oil, on an oil absorption number measurement apparatus manufactured by ASAHI SOUKEN. Specifically, with the oil absorption number measurement apparatus, while linseed oil was being added to the carbon particles, the torque was detected. Then, the amount of linseed oil added until a torque equivalent to 70% of the maximum torque was generated was converted into the amount per 100 g of the carbon particles, and the resulting value was regarded as the oil absorption number [mL/100g] of the carbon particles.

[Measurement of Viscosity of CMC]

A 1-mass% aqueous solution of CMC was prepared. The viscosity of this aqueous solution was measured with the use of a rotational viscometer at a rotational speed of 40 rpm at a temperature of 25°C. In Examples and Comparative Examples, the viscosity of the 1-mass% aqueous solution of CMC measured by the above-described procedure was within the range of 4.0 to 5.0 Pa·s.

[Calculation of Kneading Load]

In each kneading step, the output current at the kneading apparatus at the time of kneading the blend (the mixture of the materials to be kneaded) was obtained with a logger at intervals of 0.1 sec. From the output current thus obtained, the output current at the kneading apparatus at the time of kneading without load (shearing force) application to the blend was subtracted, and the resulting value was regarded as the output current used for load application, and from the output current used for load application, the cumulative electric power [Wh] was calculated. The cumulative electric power was divided by the weight of the negative electrode active material in the blend, and the cumulative electric power per 1 kg of the negative electrode active material was regarded as the kneading load [Wh/kg]. Results are given in Table 1 to Table 6.

[Measurement of Viscosity of Negative Electrode Slurry]

Under conditions at a temperature of 25°C, with a rheometer, a flow curve was obtained as the shear rate of the negative electrode slurry was increased, and the viscosity at a shear rate of 100 $s^{-1}$ was read. Results are given in Table 1 to Table 6.

[Measurement of Blackness]

The negative electrode slurry in an amount of 2 g was diluted 10-fold with pure water to form 20 g of a diluted slurry. Four 2-mL centrifuge cells were prepared, and 2 mL of the diluted slurry was placed in each cell, followed by setting the cells into the centrifuge and performing centrifugation at 15,000 rpm for 30 min. After centrifugation, the supernatant was collected by decantation, and a 5-mL aliquot of the collected supernatant was diluted 5-fold with pure water to form 25 mL of a diluted supernatant.

Pure water was placed in a glass cell (optical path length, 25 mm) of an absorption spectrometer, for zero point measurement of the absorption spectrometer. In a glass cell with the same optical path length, 10 mL or more of the diluted supernatant was placed, and the glass cell was set into the absorption spectrometer that underwent the zero point measurement, followed by measurement of the absorbance at wavelengths of 600 nm, 700 nm, 800 nm, and 900 nm, namely absorbances A(600), A(700), A(800), and A(900). By the equation below, the blackness was calculated. Results are given in Table 1 to Table 6.

$$Blackness = [A(600) + A(700) + A(800) + A(900)] \times 5$$

[Comparative Example 1]

As a negative electrode active material, carbon particles were prepared. The carbon particle was a covered graphite particle (oil absorption number, 41.4 mL/100g) having a core made of graphite and a conductive covering layer covering the surface of the core. CMC as a water-soluble polymer, SBR as a binder, and pure water as water were prepared. As the kneading apparatus, a planetary mixer with 1-L capacity was prepared.

Into the planetary mixer, the components were introduced where the amount of the negative electrode active material (covered graphite particles) was 0.4 kg and the proportion of (negative electrode active material):(water-soluble polymer) was 100:0.9 (in mass), and water was also introduced thereinto so that the solid content became 51 mass%, followed by kneading at a kneading load (1a) of 0.0 Wh/kg for 12 min to form a kneaded product (1) (the step (1a) of the first kneading step). Subsequently, a binder and water were added to the kneaded product (1) so that the proportion of (negative electrode active material):(water-soluble polymer):binder became 100:0.9:1.0 (in mass) and the solid content became 51 mass%, followed by kneading at a kneading load (2) of 0.0 Wh/kg for 10 min (the second kneading step) to form a negative electrode slurry (solid content, 51 mass%).

[Example 1]

The same negative electrode active material, the same water-soluble polymer, the same binder, and the same water as in Comparative Example 1 were prepared. As the kneading apparatus, a planetary mixer with 1-L capacity was prepared. Into the planetary mixer, the components were introduced where the amount of the negative electrode active material (covered graphite particles) was 0.4 kg and the proportion of (negative electrode active material):(water-soluble polymer) was 100:0.9 (in mass), and water was also introduced thereinto so that the solid content became 65 mass%, followed by kneading at a kneading load (1a) of 0.7 Wh/kg for 5 min (the step (1a) of the first kneading step). Subsequently, the kneaded product thus obtained was further kneaded at a kneading load (1b) of 6.2 Wh/kg for 7 min (the step (1b) of the first kneading step) to form a kneaded product (1). The rotational speed (the number of revolutions) of the stirring blade of the kneading apparatus at the kneading load (1b) was set at 60 rpm. Subsequently, a binder and water were added to the kneaded product (1) so that the proportion of (negative electrode active material):(water-soluble polymer):binder became 100:0.9: 1.0 (in mass) and the solid content became 51 mass%, followed by kneading at a kneading load (2) of 0.0 Wh/kg for 10 min (the second kneading step) to form a negative electrode slurry (solid content, 51 mass%).

[Examples 2 and 3]

Except that the solid content in the first kneading step, the kneading load (1a), the kneading duration at the kneading load (1a), the kneading load (1b), and the kneading duration at the kneading load (1b) were set as specified in Table 1, the procedure described in Example 1 was implemented to form negative electrode slurries.

[Measurement of Resistance of Secondary Battery]

The negative electrode slurry was applied to a current collector and the negative electrode slurry thus applied was dried and compressed to form a negative electrode active material layer, and thereby a negative electrode having the current collector and the negative electrode active material layer was obtained. A separator and a positive electrode were prepared, and the negative electrode and the positive electrode were stacked with the separator interposed therebetween, to form an electrode assembly. The resulting electrode assembly was placed in a battery case, and a non-aqueous electrolyte solution was injected thereinto to form a secondary battery. Under conditions at a temperature of 25°C, the secondary battery was charged until the state of charge (SOC) reached 50%, and after charging, input resistance [mΩ] was measured at intervals of 0.1 sec. The input resistance measured for the secondary battery prepared by using the negative electrode slurry obtained in Comparative Example 1 and Examples 1 to 3 was divided by the input resistance measured for the secondary battery prepared by using the negative electrode slurry obtained in Comparative Example 1, to calculate the resistance ratio of the secondary battery. Results are given in Table 1.

[Table 1]

|  | Comp. Ex. 1 | Ex. 1 | Ex. 2 | Ex. 3 |
|---|---|---|---|---|
| Negative electrode slurry |  |  |  |  |
| Blackness | 3.7 | 9.9 | 15.7 | 7.6 |
| Viscosity [Pa·s] | 1.8 | 1.1 | 1.1 | 1.4 |
| Carbon particles |  |  |  |  |
| Oil absorption number [mL/100g] | 41.4 | 41.4 | 41.4 | 41.4 |
| First kneading step |  |  |  |  |
| Solid content mass% | 51 | 65 | 65 | 63 |
| Kneading load (1a) [Wh/kg] | 0.0 | 0.7 | 0.7 | 0.1 |
| Kneading duration at kneading load(1a) [min] | 12 | 5 | 5 | 5 |
| Kneading load (1b) [Wh/kg] | 0.0 | 6.2 | 11.6 | 9.7 |
| Kneading duration at kneading load (1b) [min] | 0.0 | 7 | 15 | 15 |
| Rotational speed of stirring blade at kneading load (1b) [rpm] | - | 60 | 60 | 60 |
| Second kneading step |  |  |  |  |
| content [mass%] | 51 | 51 | 51 | 51 |
| Kneading load (2) [Wh/kg] | 0.0 | 0.0 | 0.0 | 0.0 |
| Kneading duration at kneading load (2) [min] | 10 | 10 | 10 | 10 |
| Secondary battery |  |  |  |  |
| Resistance ratio | 1.000 | 1.016 | 1.026 | 1.012 |

[Comparative Examples 2 to 6, Examples 4 to 9]

Except that the solid content in the first kneading step, the kneading load (1a), the kneading duration at the kneading load (1a), the kneading load (1b), and the kneading duration at the kneading load (1b) were set as specified in Table 2 and Table 3, the procedure described in Example 1 was implemented to form negative electrode slurries. The solid content in the first kneading step is different between Group [i] (Comparative Example 2 and Examples 4 to 7), Group [ii] (Examples 8 and 9), and Group [iii] (Comparative Examples 3 to 6). In each group, kneading in the comparative examples and/or examples within the group was carried out under the same conditions except that the kneading load (1b) was changed by changing the kneading duration.

[Table 2]

|  | Comp. Ex. 2 | Ex. 4 | Ex. 5 | Ex. 6 | Ex. 7 |
|---|---|---|---|---|---|
| Negative electrode slurry |  |  |  |  |  |
| Blackness | 3.9 | 6.0 | 7.5 | 8.6 | 9.6 |
| Viscosity [Pa·s] | 1.6 | 1.6 | 1.5 | 1.5 | 1.5 |
| Carbon particles |  |  |  |  |  |
| Oil absorption number [mL/100g] | 41.4 | 41.4 | 41.4 | 41.4 | 41.4 |
| First kneading step |  |  |  |  |  |
| Solid [maps%] content | 63 | 63 | 63 | 63 | 63 |

(continued)

| First kneading step | | | | | |
|---|---|---|---|---|---|
| Kneading load (1a) [Wh/kg] | 0.1 | 0.1 | 0.1 | 0.1 | 0.1 |
| Kneading duration at kneadinp load (1a) [min] | 5 | 5 | 5 | 5 | 5 |
| Kneading load (1b) [Wh/kg] | 1.9 | 3.5 | 5.0 | 6.5 | 7.9 |
| Kneading duration at kneading load (1b) [min] | 5 | 10 | 15 | 20 | 25 |
| Rotational speed of stirring blade at kneading load (1b) [rpm] | 60 | 60 | 60 | 60 | 60 |
| Second kneading step | | | | | |
| Solid content [mass%] | 51 | 51 | 51 | 51 | 51 |
| Kneading load 2) [Wh/kg] | 0.0 | 0.0 | 0.0 | 0.0 | 0.0 |
| Kneading duration at kneading load (2) [min] | 10 | 10 | 10 | 10 | 10 |

[Table 3]

| | Ex. 8 | Ex. 9 | Comp. Ex. 3 | Comp. Ex. 4 | Comp. Ex. 5 | Comp. Ex. 6 |
|---|---|---|---|---|---|---|
| Negative electrode slurry | | | | | | |
| Blackness | 100 | 14.1 | 29.1 | 35.5 | 39.3 | 44.0 |
| Viscosity [Pa·s] | 1.5 | 1.4 | 1.1 | 0.9 | 0.7 | 0.6 |
| Carbon particles | | | | | | |
| Oil absorption number [mL/100g] | 41.4 | 41.4 | 41.4 | 41.4 | 41.4 | 41.4 |
| First kneading step | | | | | | |
| Solid content [mass %] | 65 | 65 | 67 | 67 | 67 | 67 |
| Kneading load (1a) [Wh/kg] | 0.6 | 0.6 | 0.7 | 0.7 | 0.7 | 0.7 |
| Kneading duration at kneading load (1a) [min] | 5 | 5 | 5 | 5 | 5 | 5 |
| Kneadjng load (1b) [Wh/kg] | 2.7 | 4.7 | 11.7 | 15.9 | 19.7 | 24.3 |
| Kneading duration at kneading load (1b) [min] | 5 | 10 | 10 | 15 | 20 | 25 |
| Rotational speed of stirring blade at kneading load (1b) [rpm] | 60 | 60 | 60 | 60 | 60 | 60 |
| Second kneading step | | | | | | |
| Solid content [mass%] | 51 | 51 | 51 | 51 | 51 | 51 |
| Kneading load (2) [Wh/kg] | 0.0 | 0.0 | 0.0 | 0.0 | 0.0 | 0.0 |
| Kneading duration at kneading load (2) [min] | 10 | 10 | 10 | 10 | 10 | 10 |

Results from Comparative Example 1 and Examples 1 to 3 indicate that there is a correlation between the blackness of the negative electrode slurry and the resistance ratio of the secondary battery and as the blackness increases, the resistance ratio of the secondary battery increases and the resistance of the secondary battery becomes worse. This suggests that the blackness can be used as an index for checking resistance properties of the secondary battery, and therefore, as for Examples 4 to 9 and Comparative Examples 2 to 6, it is also conceivable that the smaller the blackness is, the better the resistance of the secondary battery is.

[Examples 10 to 15, Comparative Examples 7 and 8]

Except that the solid content in the first kneading step, the kneading load (1a), the kneading duration at the kneading load (1a), the kneading load (1b), the kneading duration at the kneading load (1b), and the rotational speed of the stirring blade of the kneading apparatus at the kneading load (1b) were set as specified in Table 4 and Table 5, the procedure described in Example 1 was implemented to form negative electrode slurries. The rotational speed of the stirring blade is the number of revolutions.

[Table 4]

|  | Ex. 10 | Ex. 11 | Ex. 12 | Ex. 13 | Comp. Ex. 7 |
|---|---|---|---|---|---|
| Negative electrode slurry |  |  |  |  |  |
|    Blackness | 4.6 | 9.6 | 6.5 | 13.4 | 17.2 |
|    Viscosity [Pa·s] | 1.2 | 1.1 | 1.2 | 1.1 | 0.9 |
| Carbon |  |  |  |  |  |
|    Oil absorption number [mL/100g] | 41.4 | 41.4 | 41.4 | 41.4 | 41.4 |
| First kneading step |  |  |  |  |  |
|    Solid content [mass%] | 65 | 65 | 65 | 65 | 65 |
|    Kneading load (1a) [Wh/kg] | 0.7 | 0.7 | 0.6 | 0.6 | 0.6 |
|    Kneading duration at kneadinp load (1a) [min] | 5 | 5 | 5 | 5 | 5 |
|    Kneading load (1b) [Wh/kg] | 2.4 | 6.0 | 2.5 | 6 | 11.8 |
|    Kneading duration at kneadinp load (1b) [min] | 5 | 15 | 5 | 15 | 30 |
|    Rotational speed of stirring blade at kneading load (1b) [rpm] | 30 | 30 | 45 | 45 | 45 |
| Second kneading step |  |  |  |  |  |
|    Solid content [mass%] | 51 | 51 | 51 | 51 | 51 |
|    Kneading load (2) | 0.0 | 0.0 | 0.0 | 0.0 | 0.0 |
|    Kneading duration at kneading load (2) [min] | 10 | 10 | 10 | 10 | 10 |

[Table 5]

|  | Ex. 14 | Ex. 15 | Comp. Ex. 8 |
|---|---|---|---|
| Negative electrode slurry |  |  |  |
|    Blackness | 8.1 | 15.1 | 21.0 |
|    Viscosity [Pa·s] | 1.1 | 1.0 | 0.8 |
| Carbon particles |  |  |  |
|    Oil absorption number [mL/100g] | 41.4 | 41.4 | 41.4 |
| First kneading step |  |  |  |
|    Solid content [mass%] | 65 | 67 | 67 |
|    Kneading load (1a) [Wh/kg] | 0.5 | 0.5 | 0.5 |
|    Kneading duration at kneading load (1a) [min] | 5 | 5 | 5 |
|    Kneading load (1b) [Wh/kg] | 3.9 | 6.5 | 19.6 |
|    Kneading duration at kneading load (1b) [min] | 5 | 15 | 30 |
|    Rotational speed of stirring blade at kneading load (1b) [rpm] | 60 | 60 | 60 |

(continued)

| Second kneading step | | | |
|---|---|---|---|
| Solid content [mass%] | 51 | 51 | 51 |
| Kneading load (2) [Wh/kg] | 0.0 | 0.0 | 0.0 |
| Kneading duration at kneading load (2) [min] | 10 | 10 | 10 |

[Examples 16 and 17]

As the kneading apparatus, a planetary mixer with 100-L capacity was prepared. Into the planetary mixer, the components were introduced where the amount of negative electrode active material (carbon particles which were covered graphite particles) was 40 kg, and the oil absorption number of the carbon particles, the solid content in the first kneading step, the kneading load (1a), the kneading duration at the kneading load (1a), the kneading load (1b), the kneading duration at the kneading load (1b), and the rotational speed of the stirring blade of the kneading apparatus at the kneading load (1b) were set as specified Table 6; except these conditions, the procedure described in Example 1 was implemented to form negative electrode slurries.

[Examples 18 and 19]

As the kneading apparatus, a planetary mixer with 1300-L capacity was prepared. Into the planetary mixer, the components were introduced where the amount of negative electrode active material (carbon particles which were covered graphite particles) was 640 kg, and the oil absorption number of the carbon particles, the solid content in the first kneading step, the kneading load (1a), the kneading duration at the kneading load (1a), the kneading load (1b), the kneading duration at the kneading load (1b), and the rotational speed of the stirring blade of the kneading apparatus at the kneading load (1b) were set as specified in Table 6; except these conditions, the procedure described in Example 1 was implemented to form negative electrode slurries. Table 6 also includes results of Examples 1 and 2, for reference purposes.

[Table 6]

| | Ex. 1 | Ex. 2 | Ex. 16 | Ex. 17 | Ex. 18 | Ex. 19 |
|---|---|---|---|---|---|---|
| Negative electrode slurry | | | | | | |
| Blackness | 9.9 | 15.7 | 11.5 | 15.1 | 5.7 | 11.6 |
| Viscosity [Pa·s] | 1.1 | 1.1 | 1.4 | 1.3 | 1.1 | 1.2 |
| Carbon particles | | | | | | |
| Oil absorption number [mL/100g] | 41.4 | 41.4 | 41.8 | 40.8 | 41.9 | 41.9 |
| Kneading apparatus | | | | | | |
| Capacity [L] | 1 | 1 | 100 | 100 | 1300 | 1300 |
| Amount of introduced carbon particles [kg] | 0.4 | 0.4 | 40 | 40 | 640 | 640 |
| First kneading step | | | | | | |
| Solid content [mass %] | 65 | 65 | 64 | 66 | 65 | 65 |
| Kneading load (1a) [Wh/kg] | 0.7 | 0.7 | 1.3 | 2.0 | 0.2 | 0.3 |
| Kneading duration at kneading load (1a) [min] | 5 | 5 | 10 | 10 | 2 | 2 |
| Kneading load (1b) [Wh/kg] | 6.2 | 11.6 | 6.3 | 6.3 | 2.0 | 8.2 |
| Kneading duration at kneading load (1b) [min] | 7 | 15 | 12 | 7 | 3 | 20 |
| Rotational speed of stirring blade at kneading load (1b) [rpm] | 60 | 60 | 37 | 37 | 14 | 14 |
| Second kneading step | | | | | | |
| Solid content [mass%] | 51 | 51 | 51 | 51 | 51 | 51 |
| Kneading load (2) [Wh/kg] | 0.0 | 0.0 | 0.0 | 0.0 | 0.0 | 0.0 |

(continued)

| Second kneading step | | | | | | |
|---|---|---|---|---|---|---|
| Kneading duration at kneading load (2) [min] | 10 | 10 | 10 | 10 | 10 | 10 |

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

**Claims**

1. A method of producing a negative electrode slurry, the method comprising:

   a first kneading step to knead a negative electrode active material containing carbon particles, a water-soluble polymer, and water at a kneading load (1a) of 2.2 Wh/kg or less, and then knead at a kneading load (1b), wherein the kneading load (1b) is more than the kneading load (1a) and within a range of 2.0 to 11.6 Wh/kg; and
   a second kneading step to knead a kneaded product obtained in the first kneading step, a binder other than the water-soluble polymer, and water at a kneading load (2) of 0.5 Wh/kg or less.

2. The method of producing a negative electrode slurry according to claim 1, wherein a blackness of a supernatant separated by centrifugation of the negative electrode slurry is from 4.0 to 16.0.

3. The method of producing a negative electrode slurry according to claim 1 or 2, wherein the water-soluble polymer is a cellulose derivative.

4. The method of producing a negative electrode slurry according to any one of claims 1 to 3, wherein

   the water-soluble polymer is carboxymethylcellulose, and
   a viscosity of a 1-mass% aqueous solution of the carboxymethylcellulose measured at 25°C at a rotational speed of 40 rpm is from 1.0 to 10.0 Pa·s.

5. The method of producing a negative electrode slurry according to any one of claims 1 to 4, wherein the binder includes styrene-butadiene rubber.

6. The method of producing a negative electrode slurry according to any one of claims 1 to 5, wherein

   the carbon particles include a covered graphite particle, and
   the covered graphite particle has a core made of graphite and a conductive covering layer covering at least part of a surface of the core.

7. The method of producing a negative electrode slurry according to any one of claims 1 to 6, wherein in the first kneading step, the negative electrode active material, the water-soluble polymer, and water are kneaded in a proportion of 100:(0.5 to 5):(40 to 75) (in mass).

8. The method of producing a negative electrode slurry according to any one of claims 1 to 7, wherein in the second kneading step, the negative electrode active material, the water-soluble polymer, the binder, and water are kneaded in a proportion of 100:(0.5 to 5):(0.5 to 5):(60 to 150) (in mass).

9. The method of producing a negative electrode slurry according to any one of claims 1 to 8, wherein

   an oil absorption number of the carbon particles is from 30 to 55 mL/100g, and
   a solid content of a mixture of components to be kneaded in the first kneading step is from 58 to 70 mass%.

FIG.1

```
        ┌─────────────┐
        │    START    │
        └──────┬──────┘
               │
               ▼
┌──────────────────────────────────┐
│ KNEAD NEGATIVE ELECTRODE         │
│ ACTIVE MATERIAL, WATER-SOLUBLE   │
│ POLYMER, AND WATER               │
└──────────────┬───────────────────┘
               │
               ▼
┌──────────────────────────────────┐
│                                  │
│   FURTHER ADD BINDER AND         │
│   WATER AND KNEAD                │
│                                  │
└──────────────┬───────────────────┘
               │
               ▼
        ┌─────────────┐
        │     END     │
        └─────────────┘
```

## EUROPEAN SEARCH REPORT

**Application Number**

EP 26 15 0551

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2015 213017 A (NISSAN MOTOR) 26 November 2015 (2015-11-26) * claims; examples 2-1 to 2.4 * ----- | 1-9 | INV. H01M4/04 H01M4/133 H01M4/139 H01M4/62 H01M10/0525 |
| A | HUBER KORBINIAN ET AL: "Understanding slurry mixing effects on the fast charging capability of lithium-ion battery cells: Methodology and case study", JOURNAL OF POWER SOURCES ELSEVIER, AMSTERDAM, NL, [Online] vol. 536, 28 April 2022 (2022-04-28), XP087048150, ISSN: 0378-7753, DOI: 10.1016/J.JPOWSOUR.2022.231455 [retrieved on 2022-04-28] * figure 1 and paragraph 2.1.1 * ----- | 1-9 | |

**TECHNICAL FIELDS SEARCHED (IPC)**

H01M

The present search report has been drawn up for all claims

| Place of search | Date of completion of the search | Examiner |
|---|---|---|
| Munich | 19 May 2026 | Okunowski, Françoise |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 0551

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2026

| Patent document cited in search report | Publication date | Patent family member(s) | Publication date |
|---|---|---|---|
| JP 2015213017 A | 26-11-2015 | JP 6515444 B2 | 22-05-2019 |
| | | JP 2015213017 A | 26-11-2015 |

EPO FORM P0459

For more details about this annex : see Official Journal of the European Patent Office, No. 12/82

**REFERENCES CITED IN THE DESCRIPTION**

**Patent documents cited in the description**

- JP 2025012011 A

- JP 2024046312 A